# EUROPEAN PATENT SPECIFICATION

(11) **EP 3 025 110 B1**
(45) Date of publication and mention of the grant of the patent: **07.03.2018**
(21) Application number: 14762094.2
(22) Date of filing: 21.07.2014
(51) Int. Cl.: F27B 7/20, F28D 1/06, F28D 7/00, F27D 17/00, F28D 21/00

(54) **SYSTEM AND METHOD FOR RECOVERING WASTE HEAT GENERATED IN INTERNALLY INSULATED REACTORS**
SYSTEM UND VERFAHREN ZUR RÜCKFÜHRUNG VON ABWÄRME BEI INNENISOLIERTEN REAKTOREN
SYSTÈME ET PROCÉDÉ DE RÉCUPÉRATION DE LA CHALEUR RÉSIDUELLE PRODUITE DANS DES RÉACTEURS POURVUS D'UNE ISOLATION INTÉRIEURE

(30) Priority: 26.07.2013 IN 3349CH2013; 02.10.2013 IN 4474CH2013
(43) Date of publication of application: 01.06.2016
(73) Proprietor: EBERHARD, Anette, 2830 Virum (DK)
(72) Inventor: CHRISTIANSEN, Claus, DK-2830 Virum (DK)
(74) Representative: Høiberg P/S
(86) International application number: PCT/IB2014/063267
(87) International publication number: WO 2015/011625

(56) References cited:
- US-A- 4 238 187
- US-A- 4 410 999

## Description

### BACKGROUND

### Field

The disclosed subject matter relates to the field of waste heat management and more particularly but not exclusively to recovering the waste heat generated in internally insulated reactors, such as a rotary kiln.

### Discussion of related field

Conventionally, rotary kilns are used in the production of cement, lime and sponge iron, among other applications. The temperature within the kiln can be 1000 °C or higher. Therefore, the kiln is insulated by providing an internal refractory lining to avoid overheating of the shell of the kiln.

It has been observed that, sometimes the refractory lining, in the form of patches, detach from the lining. Formation of such patches results in direct heating of corresponding portion of the shell, thereby resulting in hot spots. If such hot spots are not detected at an early stage, portions of the shell gets heated directly, thereby resulting in deformation of the shell, and may make the kiln non-functional.Even in the presence of the refractory lining, it has been observed that, the temperature of the shell of the kiln is at a level of 200 °C to 300 ° C or higher, which leads to a relatively high loss of heat to the surroundings due to radiation and convection losses.

Over a period of time, efforts have been made to avoid loss of heat into the surroundings. Some of the proposed theoretical techniques include increasing the thickness or quality of an internal insulation, enclosing the shell with a light material and providing an outside insulation encircling the shell of the kiln, with a small space between the outer shell and the kiln shell.

Increasing the thickness or quality of the internal insulation adds to cost and/or weight and volume of the insulation, thereby making it prohibitive.

The approach of enclosing the shell with a light insulating material, such as mineral wool, addresses some of the above problems. However, such an enclosure limits the possibility of determining of hot spots, and increases the damage when a hot spot occurs, because the additional heat input to the shell cannot escape because of the additional insulation. Failure to determine the hot spots at an early stage has serious consequences, as discussed earlier.

Similarly, providing an outer shell insulated on the outside encircling but not touching the shell of the kiln may reduce the loss of heat into the surroundings. However, such a system also limits determination of the hot spots, and dramatically increases the speed of development of the hot spot.

The aforementioned techniques have drawbacks as highlighted, and hence have not been widely adopted.

Further, attempts have been made to harness the heat emitted by the shell of the kiln. A couple of techniques that attempt to harness the heat emitted by the shell of the kiln have been disclosed in PCT application numbered PCT/US2010/020116 and US patent 4238187.

PCT/US2010/020116 discloses a technique for recovering heat from the shell of the kiln by providing an enclosure over the shell of the kiln. In the instant technique, combustion air for the kiln is passed through the enclosure, thereby decreasing the specific consumption of fuel. A serious drawback of this technique is that, it inevitably cools the enclosure through the heat exchange with the air being heated, and thus increases the amount of heat being transferred out through the shell. Hence, only if all the air can be used as combustion air, will it have a positive effect on the heat loss. Furthermore, in both lime and cement plants, where this technique could be used, there is already an abundance of low temperature heat, which can be used in a simple combustion air preheater at much lower cost than building a construction like the one suggested. Hence, the suggested technique may not be economically viable.

US 4238187 discloses a technique for recovering waste heat generated when materials are calcined in a rotary kiln. In the aforementioned technique, the heat is recovered by preheating a coolant that passes through a plurality of modules element that follows the outer form of the shell. Although this method addresses the problem of utilizing the waste heat and observing the kiln surface for possible hot spots, it has drawbacks. It has been observed that, the aforementioned process only recovers part of the heat from the kiln, if one still wishes to be able to examine the kiln. Further, it has, in general not been possible to utilize the recovered waste heat for any useful purpose, except for district heating, if the kiln is placed in proximity to a city where district heating is used. However, even this technique has not been seen as interesting, probably due to another major drawback, namely that the system is prohibitively costly compared with the value of the amount of heat that can be recovered.

In light of the foregoing discussion, there is a need for a technique that can cost effectively utilize waste heat from internally insulated high temperature reactors, such as rotary kilns. Further, the technique shall allow early detection of hot spots in the shell of the reactor.

Further, it shall be noted that, the shell temperature of such internally insulated reactors is the deciding factor of its lifespan and maintenance demands. A very high shell temperature adversely affects the mechanical strength of the reactors and may result in complete breakdown. Hence it is very important not to implement waste heat recovery measures without having the ability to control and adjust the temperature of the shell of the reactor.

It has been observed that, providing an enclosure insulated on the outside, encircling but not touching the shell of the rotary kiln, while being successful to some extent in reducing the amount of heat emitted by the reactor to the surroundings, can adversely affect the temperature of the shell of the reactor. The adverse effect can be attributed to the following: (a) the amount of heat which is transported away from the shell by means of radiation decreases when the shell is surrounded by an enclosure, which has a higher temperature than the surroundings and (b) the enclosure limits the amount and velocity of air passing around the shell, thereby reducing the amount of heat, which is transported away from the shell by means of convection, i.e. heat exchange with the surrounding air. The overall effect of these two factors is that the temperature of the shell will increase.

Hence, there is a need for techniques that can not only cost effectively utilize waste heat from internally insulated high temperature reactors, but also provides the possibility to control the shell temperature of such reactors.

### SUMMARY

A system for recovering heat emitted by an internally insulated rotary kiln is provided as in claim 1. The system may include one or more modules enclosing a portion of an outer shell of the kiln. Each of the modules may include an inner shell and an outer shell defining a space within the module. An inlet may be provided for receiving water into the modules. The water received through the inlet is distributed as a film, over the surface of the inner shell, which is facing the outer shell of the module, using a water distributor. Each of the modules may further include a pressure regulating device configured to regulate pressure within the module such that the pressure within the module is ensured to be in proximity to ambient pressure. An outlet may be configured to allow the exit of heated water from the module.

In another embodiment, a system for detecting formation of a hotspot on a rotary kiln is provided. The system may include one or more modules enclosing an outer shell of the kiln along the length of the kiln. Each of the modules may include an inlet configured to receive water into the modules. The water received through the inlet is distributed as a film, over the surface of the inner shell, which is facing the outer shell of the module, using a water distributor. At least one hole or pressure releasing device may be configured to allow the exit of steam generated in the module. An outlet may be configured to allow the exit of heated water from the module. Depending on one or more characteristics of the steam exiting the pressure releasing device, the formation of the hotspot may be determined.

A method for recovering heat emitted by a rotary kiln is provided as in claim 13. The method comprises providing one or more modules configured to enclose at least a portion of an outer shell. Water may be received into the module and heated water may be allowed to exit the module. Flow of water into the modules may be regulated at least based on temperature of water exiting the module. The proximity of the modules to the kiln may be regulated to regulate temperature of an outer shell of the kiln or temperature of water exiting the module.

### BRIEF DESCRIPTION OF DRAWINGS

Embodiments are illustrated by way of example and not limitation in the Figures of the accompanying drawings, in which like references indicate similar elements and in which:
**FIG. 1** illustrates a simplified cross sectional view of a rotary kiln **100**, in accordance with an embodiment;
**FIG. 1A** illustrates a simplified perspective view of the rotary kiln **100** of **FIG. 1**;
**FIG. 2A** provides a sectional view of a pair of modules **202** enclosing a portion of the outer shell **102**, in accordance with an embodiment;
**FIG. 2B** is a simplified side view of plurality of modules **202** provided along the length of the rotary kiln **100**, in accordance with the embodiment;
**FIG. 2C** is a perspective view of the plurality of modules **202** provided along the length of the rotary kiln **100**;

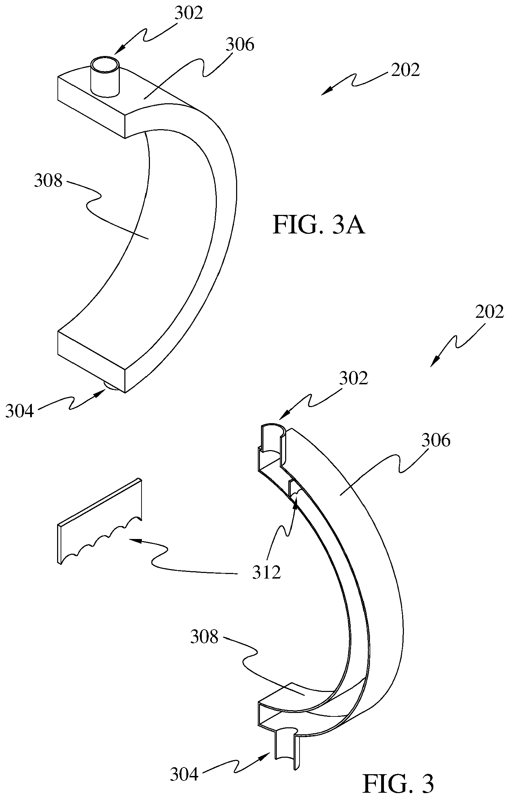

**FIG. 3** is a perspective cross sectional view of an exemplary module **202**, in accordance with an embodiment;
**FIG. 3A** is a perspective view of the exemplary module **202** of **FIG. 3**;
**FIG. 4** is a perspective cross sectional view of an exemplary module **202** that includes a temperature sensor **402**, in accordance with an embodiment;

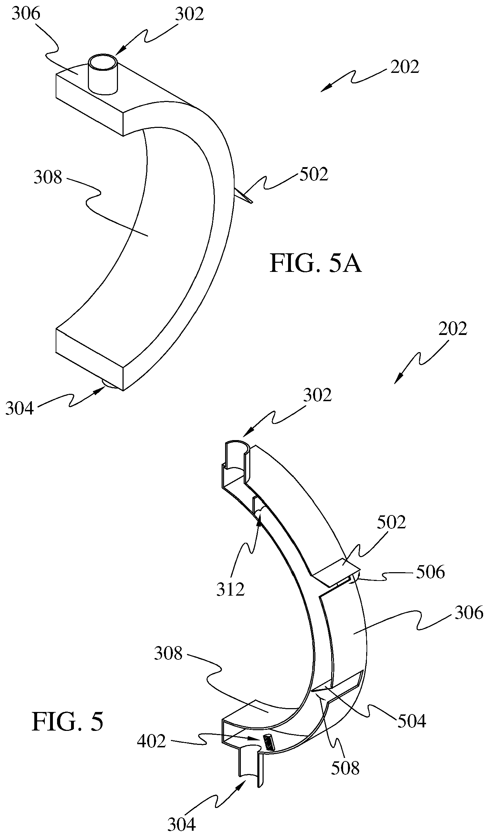

**FIG. 5** is a perspective cross sectional view of an exemplary module **202**, which includes a first flap **502** and a second flap **504** equipped to maintain pressure within the module **202** within a desired range, in accordance with an embodiment;
**FIG. 5A** is a perspective view of the exemplary module **202** of **FIG. 5**;
**FIG. 6** is a block diagram of a system **600** for utilizing hot water collected from the modules **202**, to generate electricity, in accordance with an embodiment;
**FIG. 7A** is a perspective view of a system **700** for controlling the distance between the modules **202** and the outer shell **102**, in accordance with an embodiment;
**FIG. 7B** is a perspective view of the system **700**, wherein the distance between the modules **202** and the outer shell **102** has increased, in accordance with an embodiment;
**FIG. 7C** is a perspective view of the system **700** for controlling the distance between the modules **202** and the outer shell **102** using an alternative arrangement, in accordance with an embodiment;
**FIG. 7D** is a perspective view of the system **700**, wherein the distance between the modules **202** and the outer shell **102** has been increased using the arrangement of **FIG. 7C**;
**FIG. 8** is a perspective view of a window or slit **802** built into the modules **202**, in accordance with an embodiment;
**FIG. 9** is a perspective view of plurality of modules **202** adapted with cover plates **902** to define compartments, wherein the plurality of modules **202** are provided along the length of the rotary kiln **100**, in accordance with the embodiment;
**FIG. 10A** is a perspective view of plurality of modules **202** adapted with cover members **1002** adapted to configure the extent to which gap between pair of modules **202** are exposed, in accordance with the embodiment; and
**FIG. 10B** is a front view of **FIG. 10A****.**

### DETAILED DESCRIPTION

I. OVERVIEW
II. EXEMPLARY SYSTEM
III. FIRST EXEMPLARY MODULE
IV. SECOND EXEMPLARY MODULE
V. THIRD EXEMPLARY MODULE
VI. EXEMPLARY APPLICATION
VII. EXAMPLE
VIII. FOURTH EXEMPLARY MODULE
IX. FIFTH EXEMPLARY MODULE
X. SIXTH EXEMPLARY MODULE
XI. SEVENTH EXEMPLARY MODULE
XII. EIGHTH EXEMPLARY MODULE
XIII. CONCLUSION

### I. OVERVIEW

Embodiments relate to the field of waste heat management. More particularly, but not exclusively, to recovering waste heat generated in internally insulated reactors.

In an embodiment, a number of modules enclose an outer shell of a rotary kiln. The modules are configured to absorb the heat emitted by the outer shell, thereby avoiding the loss of heat to the surroundings. The modules substantially encircle the outer shell of the kiln, and a gap is maintained between the outer shell and the modules. Each module has an inlet and an outlet. Water is introduced into the module through the inlet present at the top of the module. The inlet flow rate is maintained such that, temperature of the water exiting the module through the outlet is just below 100 °C. The hot water exiting the module can be used for district heating or as the heat input to a low temperature thermodynamic cycle and further utilized for generation of electricity.

The following detailed description includes references to the accompanying drawings, which form part of the detailed description. The drawings show illustrations in accordance with example embodiments. These example embodiments are described in enough detail to enable those skilled in the art to practice the present subject matter. However, it will be apparent to one of ordinary skill in the art that the present invention may be practiced without these specific details. In other instances, well-known methods, procedures and components have not been described in detail so as not to unnecessarily obscure aspects of the embodiments. The embodiments can be combined, other embodiments can be utilized or structural and logical changes can be made without departing from the scope of the invention. The following detailed description is, therefore, not to be taken as a limiting sense.

In this document, the terms "a" or "an" are used, as is common in patent documents, to include one or more than one. In this document, the term "or" is used to refer to a nonexclusive "or," such that "A or B" includes "A but not B," "B but not A," and "A and B," unless otherwise indicated.

### II. EXEMPLARY SYSTEM

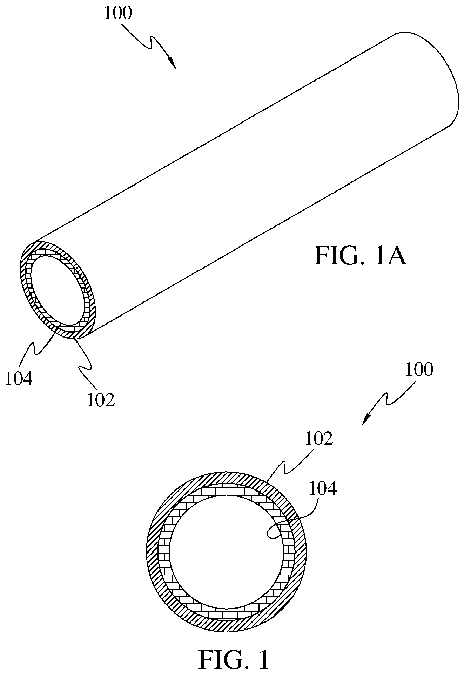

In an embodiment, a system is provided for recovering waste heat generated in internally insulated reactors, such as a rotary kiln. **FIGs 1-1A** illustrates a rotary kiln **100**, in accordance with an embodiment. The rotary kiln **100** can be used in the production of cement, lime and sponge iron, among other applications. The rotary kiln **100** includes an outer shell **102** and refractory lining **104.** The outer shell **102** is made of iron or iron alloy and the refractory lining **104** is made of special bricks. The refractory lining **104** insulates the outer shell **102**, thereby limiting the exposure of the outer shell **102** to the heat inside the rotary kiln **100.** Despite the insulation, the outer shell **102** gets heated, and the outer shell emits heat. The heat emitted by the outer shell **102** is recovered by providing a number of modules to substantially enclose the outer shell **102.**

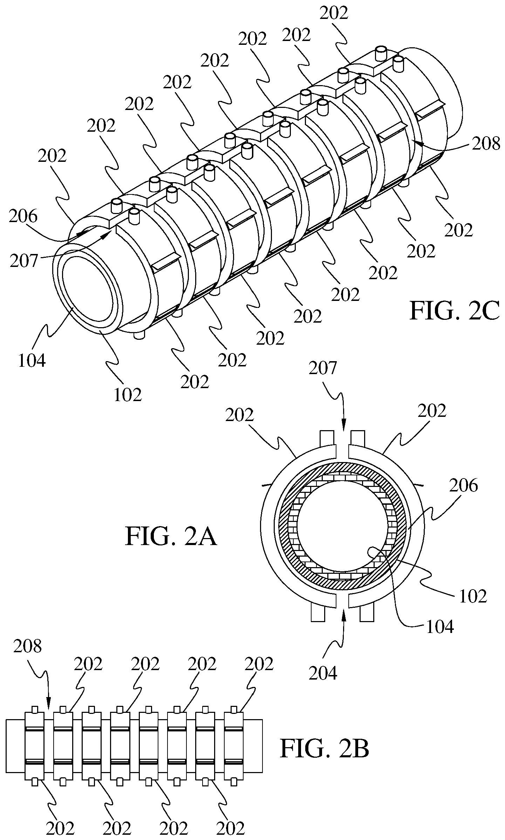

Referring to **FIGs**. **2A-2C****,** wherein **FIG. 2A** provides a sectional view of a pair of modules **202** enclosing a portion of the outer shell **102**, in accordance with an embodiment. Gaps **204** and **207** are maintained between the modules **202.** Further, a gap **206** is maintained between the outer shell **102** and the modules **202.** Although embodiments exemplify pair of modules disposed opposite each other, one or more modules may be provided along the length of the kiln 100.

It shall be noted that, such pair of modules **202** are provided along the axial length of the rotary kiln **100.** **FIG. 2B** is a simplified side view of plurality of modules **202** provided along the length of the rotary kiln **100**, in accordance with the embodiment. In this embodiment, a gap **208** is maintained between adjacent modules **202.** This gap enables removal of each module **202** while keeping the others in place, thus being able to inspect and access the kiln's **100** surface behind each single module **202.**

The gaps 204 and 207 allow inspection of the outer shell 102 both visually and by means of technology, such as, infrared kiln scanners. It shall be noted that the exact placement and size of the gap 204 and 207 may depend on the type of infrared scanner used.

It shall be noted that the shape of the modules **202** may vary based on the shape of the reactor from which the heat has to be absorbed.

### III. FIRST EXEMPLARY MODULE

Each of the modules **202** is configured to recover heat emitted by the outer shell **102.** Referring to **FIGs**. **3-3A** the module **202** includes an inlet **302**, an outlet **304.** The module **202** includes an inner shell **308** and an outer shell **306** spaced apart to define an empty space within the module **202.** The inlet **302** is configured to receive water into the module **202.** At the inlet **302**, a water distributor **312** is provided. The water distributor **312** is configured to create a thin film of water that can flow over the surface of the inner curvature **308** or inner shell of the module **202**, in accordance with an embodiment. The water distributor **312** could be, for example, in the form of a barrier with jagged openings provided towards the surface of the inner curvature **308.** The water introduced through the inlet **302** passes through the jagged openings, such that a thin film of water flows over the surface of the inner curvature **308** of the module **202.** As a result of such provision, heat transfer to the water is more efficient.

It shall be noted that, the module **202**, and more specifically, the surface of the inner curvature **308** that is exposed to the outer shell **102**, gets heated. As a result of heating of the module **202**, the water flowing within the module **202** also gets heated, and thereafter exits the module **202** through the outlet **304.**

It shall be further noted that, as a result of maintaining the thin film of water flow, such that the thin film of water flows over the surface of the inner curvature **308**, the heat transfer to the water is more efficient, i.e. it is possible to heat the bulk amount of water to a temperature of close to 100 °C, while maintaining a very low weight of the element, and the water contained within.

### IV SECOND EXEMPLARY MODULE

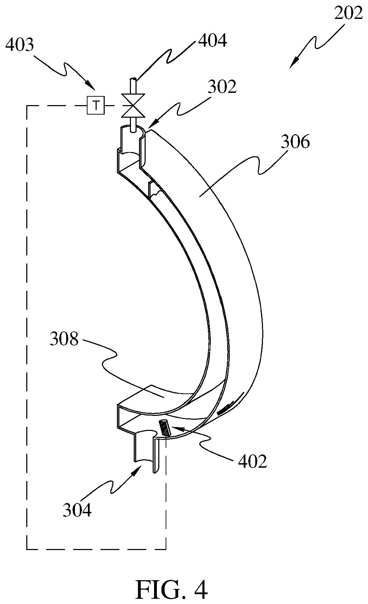

In an embodiment, a temperature sensor is provided to control the rate of flow of water in the module **202.** **FIG. 4** is a perspective cross sectional view of an exemplary module **202** that includes a temperature sensor **402**, in accordance with an embodiment. The temperature sensor **402**, which can be a thermostat, is provided close to the outlet **304.** The temperature sensor **402** can also be provided in the outlet pipe leading from the module **202.** The temperature sensor **402** determines the temperature of water exiting the module **202.** The temperature sensor **402** provides feedback to the valve **403** placed in the pipe **404** leading to the inlet **302.** It shall be noted that based on the feedback provided by the temperature sensor **402**, the inlet flow rate is controlled, thereby maintaining the temperature of water exiting the module **202** at a desired level, which may be just below 100 °C.

### V. THIRD EXEMPLARY MODULE

In an embodiment, provisions are provided in the module **202** to maintain pressure within the module **202** within a desired range close to atmospheric pressure.

Referring to **FIGs**. **5-5A** the module **202** may include a first flap **502** or pressure regulating device or pressure releasing device and a second flap **504** or pressure regulating device or vacuum releasing device equipped to maintain pressure within the module **202** within a desired range, in accordance with an embodiment. The first flap **502** is provided to release excess pressure developed within the module **202**, thereby avoiding the module **202** to be classified as a pressurized device or boiler. The second flap **504** is provided to let air in, if vacuum develops within the module **202.**

It shall be noted that, excess pressure may develop within the module **202** if the temperature of the inner surface of the module **202** increases. The increase in temperature may be a result of a hot spot that has developed in the outer shell **102**. This causes part of the water film to boil. The first flap **502** opens, as indicated by arrow **506**, when the pressure goes beyond a predefined pressure, just above atmospheric pressure. A steam plume that exits through the first flap **502** can be visually observed to signal the formation of a hot spot. It shall be noted that, when the pressure decreases, the first flap **502** closes, as indicated by arrow **506**, thereby allowing normal operation to proceed.

In an embodiment, the pressure control of the first flap **502** may be effectuated by means of a simple weight being attached to the first flap **502.**

In an embodiment, the first flap **502** is equipped with a switch that enables sending signals corresponding to the status of the first flap **502** to a control room.

In an embodiment, the second flap **504** opens, as indicated by the arrow **508**, as a result of development of vacuum within the module **502.** The second flap **504** closes, as indicated by the arrow **508**, when incoming air has caused the vacuum to disappear, thereby protecting the module **202** against deformation.

In an embodiment, the second flap 504 is effectuated by means of a simple weight being attached to the second flap 504.

In an embodiment, the module 202 can include one or more holes, which enables maintaining the pressure within the module **202** within the desired levels, with or without using the flaps mentioned above.

### VI. EXEMPLARY APPLICATION

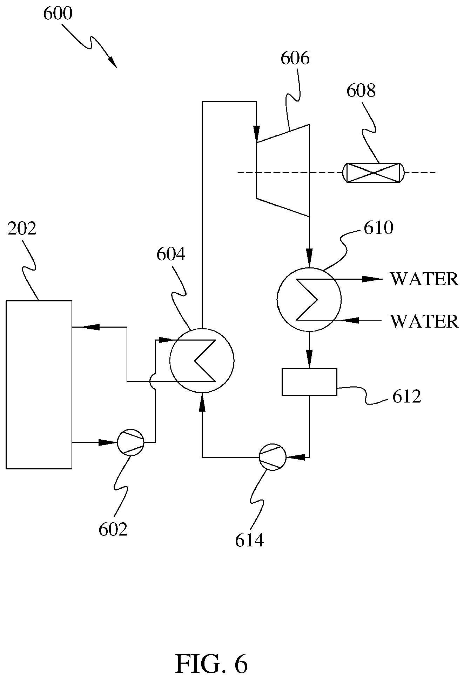

**FIG. 6** is a block diagram of a system **600** for utilizing hot water collected from the modules **202**, to generate electricity, in accordance with an embodiment. The system **600** is configured with modules **202.** The system **600** includes a first pump **602**, a heat exchanger **604**, an expansion device **606**, an electricity generator **608**, a condenser **610**, a holding tank **612** and a second pump **614.**

In an embodiment, the pump **602** is configured to receive hot water from the modules **202** enclosing the outer shell **102** of the rotary kiln **100** and pump the water to the heat exchanger **604,** which may include 3 heat exchangers, namely, a preheater, a boiler and a super heater, in which a refrigerant is evaporated.

In an embodiment, the evaporated refrigerant that is evaporated in the heat exchanger is used in the expansion device **606**, such as, a turbine or screw expander.

In an embodiment, the expansion device **606** is configured with the electricity generator **608**, thereby generating electricity.

In an embodiment, the low pressure evaporated refrigerant exiting the expansion device **606** is condensed in the condenser **610.** The condensed refrigerant is stored in the holding tank **612.** The fluid in the holding tank **612** is pumped using the pump **614** for reuse and pressure increase.

In an embodiment, the hot water leaving the module **202** can be used for heating of district heating water in the heat exchanger.

In an embodiment, the hot water can be utilized as a heat source for an absorption refrigeration unit in a district cooling system.

In an embodiment, the hot water can be integrated as part of the heat input to a thermodynamic cycle, which also uses hotter heat sources for the remaining part of its heat input.

In light of the foregoing description, it will be well appreciated by a person skilled in the art that, the waste heat present in the hot water is intelligently utilized, thereby increasing the profitability of the plant in which the system is used.

### VII. EXAMPLE

The system and method for utilizing waste heat radiating from the outside of internally insulated reactors is used in a cement production plant. In this plant, the rotating kiln **100** is enclosed by modules **202** along the length of the kiln **100.** The modules **202** enclosing the outer shell **102** of the kiln **100** is cylindrical in shape and placed side by side along the length of the kiln **100**, at a certain radial distance from the outer shell **102** of the rotary kiln **100**, which could be between 10 cm and 20 cm. It shall be noted that, the modules **202** does not cover the critical items like bearings.

The inlet **302** present at the top of each module **202** receives water into the module. The water passing through the water distributor **312** is distributed as a thin film onto the surface of the inner curvature **308** of the module **202.**

It shall be noted that, the amount of water being sent to each module **202** is controlled by a thermostat. A sensor of the thermostat may be placed at the bottom of each module **202**, which is adjacent to the outlet **304** of the module **202.** The sensor may also be placed in an exit pipe leading from the module **202.** Further, the temperature of the water, which is being taken out at the outlet **304** of each module **202** is maintained at 95-100°C.

The water collected through the outlet **304** at the bottom of each module **202**, which has a temperature close to 100 °C is used in the heat exchanger **604** to heat up district heating water or to facilitate generation of electricity, or as a heat source for the absorption refrigeration in district cooling systems. Thereafter, the water, which is cooled to a temperature for example 75 °C, is returned and introduced through the inlet **302** of each module **202.**

It shall be noted that, in case of the development of a hot spot in the kiln **100**, the water film in the module **202**, which faces the hot spot, will enter into the nucleate boiling zone. Further, since 1 cm³ of liquid water has a volume of approximately 1600 cm³ when evaporated at atmospheric conditions, a large production of steam will develop. As a result of the generation of steam, the first flap **502** will lift and the hot spot can easily be diagnosed by looking at the steam plume or by a switch corresponding to the first flap **502.**

### VIII. FOURTH EXEMPLARY MODULE

It shall be noted that, in some cases the temperature of the outer shell **102** may change, and it is desirable to retain the temperature of the outer shell **102** within prescribed limits. In order to control the temperature of the outer shell **102**, each of the pair of modules **202** are moved away or towards the outer shell **102** based on the temperature of the outer shell **102.** Referring to **FIGs**. **7A-7B** a system **700** for controlling the distance between the modules **202** and the outer shell **102** may be provided.

The heat transfer from the outer shell **102** occurs by both radiation and convection. Radiated heat is transferred to the modules **202** from the outer shell **102**, and is practically unchanged by small adjustments of the distance between the modules and the outer shell, and convection heat is transferred by the air which is in contact with the surface of the outer shell **102.**

The gaps **204** and **207** maintained between modules **202** allow air to enter and exit the gap **206** maintained between the outer shell **102** and the modules **202.** Further, the amount and velocity of air entering and exiting the gap **206** depends on the size of the gaps **204** and **207.** Hence, by varying the size of the gaps **204** and **207**, the temperature of the outer shell **102** can be controlled.

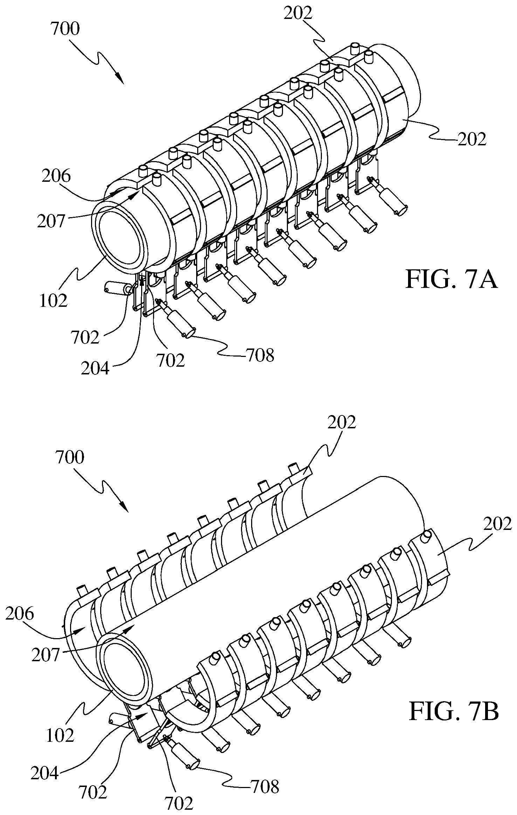

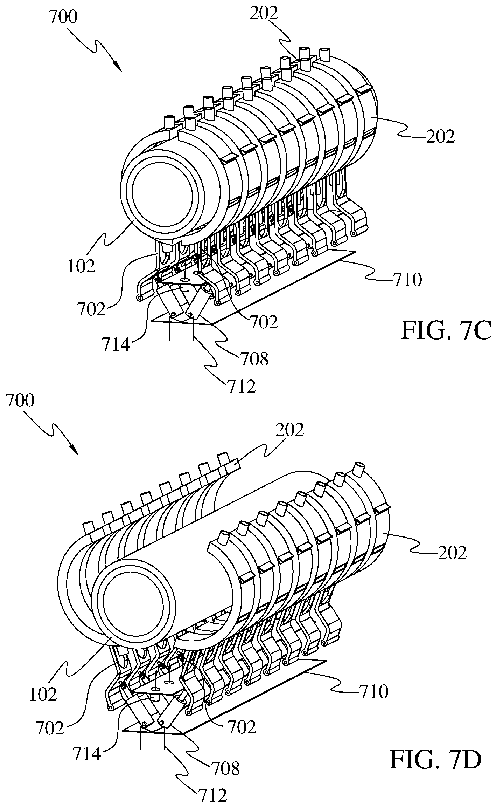

The size of the gaps **204** and **207** between the pair of modules **202** is varied by moving the modules **202** towards or away from the outer shell **102.** The movement of the modules **202** are enabled by mounting each of the modules **202** on at least one leg **702.** The leg **702**, at one end is engaged with the module **202**, while at the other end, it is engaged with a pivoting mechanism **708** in a first position, thereby enabling the leg **702** to pivot about a point **210.** Further, a retractable arm is engaged with the leg **702.** The retractable arm, for example, can be an arm provided in hydraulic or pneumatic telescopic cylinders. The pivotal movement of the leg **702**, and therefore the size of the gaps **204** and **207**, will vary based on the extent to which the arm is extended or retracted. In the instant configuration, the arm can be retracted to increase the size of the gaps **204** and **207**, thereby allowing more air to pass around the outer shell **102**, which results in higher amount of heat being removed from the outer shell **102,** and thereby decrease the outer shell temperature. Similarly, the arm can be extended to decrease the size of the gaps **204** and **207**, thereby reducing the gap **206** between the modules **202** and the outer shell **102**, which results in slightly more radiant heat being absorbed by the modules **202**, but in a smaller amount of heat being removed from the outer shell **102** by means of convection, and thereby increasing the outer shell temperature. **FIG. 7B** is an exemplary illustration of the system **700**, wherein the distance between the modules **202** and the outer shell **102** has increased, in accordance with an embodiment.

In an embodiment the leg attached to pivoting mechanism can be omitted.

In an embodiment, movement of the modules **202** can be enabled using alternate arrangements.

In an embodiment, the modules **202** are moved to increase or decrease the size of the gaps **204** and **207** based on the temperature of the outer shell **102.**

In an embodiment, the temperature reading of the outer shell **102** is obtained by means of infrared line scanners or infrared temperature sensors.

### IX. FIFTH EXEMPLARY MODULE

Referring to FIGs. 7C-7D a system 700 for controlling the distance between the modules **202** and the outer shell **102** using an alternative arrangement may be provided. In this embodiment, hydraulic telescopic cylinder assembly **708** is engaged with the leg **702** in a second position, wherein retraction of the telescopic arm decreases the gap between the module **202** and the outer shell **102**, and likewise extending the telescopic arm increases the gap between the module **202** and the outer shell **102.** Further, hydraulic telescopic cylinder assembly **708** is received in an enclosure **710** (a portion of the enclosure is illustrated to enable illustration of other details). Providing the hydraulic telescopic cylinder assembly **708** in the enclosure **710** protects the assembly **708** from the heat radiated by the outer shell **102.** Further, the enclosure protects the telescopic arm from dust, thereby protecting the assembly **708** against failure resulting from exposure to dust.

Further, in an embodiment, the assembly **708** is cooled by providing a heat exchanger **712**, so that the fluid used in the assembly **708** to enable movement of the telescopic arm is maintained within a desired temperature range.

Furthermore, in an embodiment temperature measurement means **714**, which is appropriately placed, to enable measure temperature of the outer shell **102.** Based on the temperature of the outer shell **102**, the modules **202** are either moved towards or away from the outer shell **102.**

### X. SIXTH EXEMPLARY MODULE

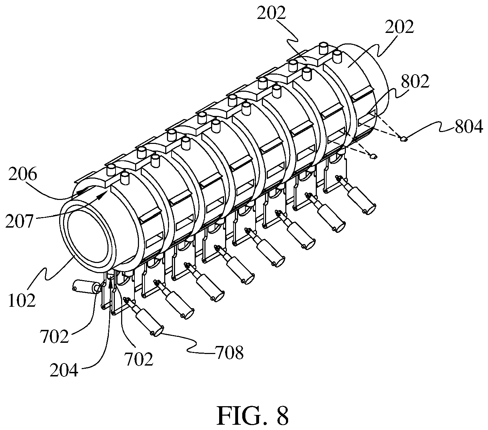

In an embodiment, the module **202** defines at least one slit or window. Referring to **FIG. 8** a window or slit **802** may be built into the module **202**, in accordance with an embodiment. The slit **802** allows infrared line scanner **804** to measure the temperature of the outer shell **102.** The infrared line scanner **804** is placed appropriately at a distance from the modules **202.** The infrared line scanner **804** monitors the temperature of the outer shell **102** through the slit **802** provided in the module **202.** In an embodiment, the data collected by the infrared line scanner **804** can be used to decide whether the modules **202** should be moved away or towards the outer shell **102.**

In an embodiment, the overall heat recovery is increased by means of treatment of the surface of the modules **202** facing the outer shell **102** and the outer surface of the outer shell **102** with coatings with high emissivity in the infrared wavelengths.

In an embodiment, a black paint coating with matte finish is provided.

In an embodiment, the coating having high emissivity values may be provided on the surface of the modules **202** facing the outer shell **102** and the outer surface of the outer shell **102.**

In an embodiment, the emissivity values are chosen between 0.95 and 1. The overall emissivity can have a value between 0.90 and 1, the latter one may be preferred.

In an embodiment, an outer surface of the outer shell of the kiln and an outer surface of the inner shell of the module are painted with a paint with high emissivity for radiation with wavelength between 1000 nanometer and 10000 nanometer.

### XI. SEVENTH EXEMPLARY MODULE

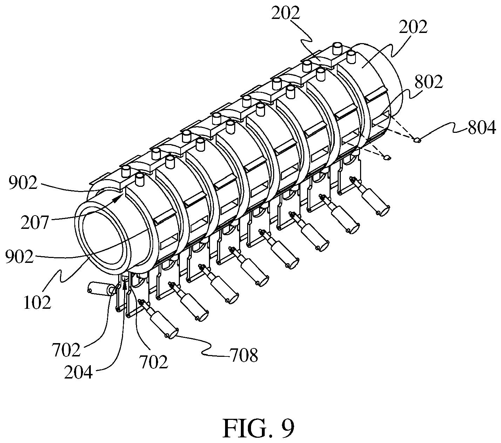

In an embodiment, each module **202** may be configured with a pair of cover plates **902.** Referring to **FIG. 9A-9B** the cover plates **902** may be provided in a space between the module **202** and the outer shell **102** of the kiln **100** to define a compartment, thereby enhancing heat recovery. The cover plate 902 may include a single plate or a plurality of plates. The cover plate **902** may radially extends from the module **202** towards the outer shell **102** of the kiln **100.** A pair of cover plates **902** may be configured with each of the modules **202.** The pair of cover plates **902** may be provided on longitudinally opposing sides of the module **202** to define a "compartment". The gap may be maintained between the edge of the cover plates **902** and the outer shell **102** of the kiln **100.**

The cover plate **902** may define a "C" shaped configuration. A larger curvature of the "C" shaped configuration may be engaged to the module **202**, for example, to the inner shell **308** of the module **202.** The smaller curvature of the "C" shaped curvature may be exposed to the outer shell **102** of the kiln **100.**

### XII. EIGHTH EXEMPLARY MODULE

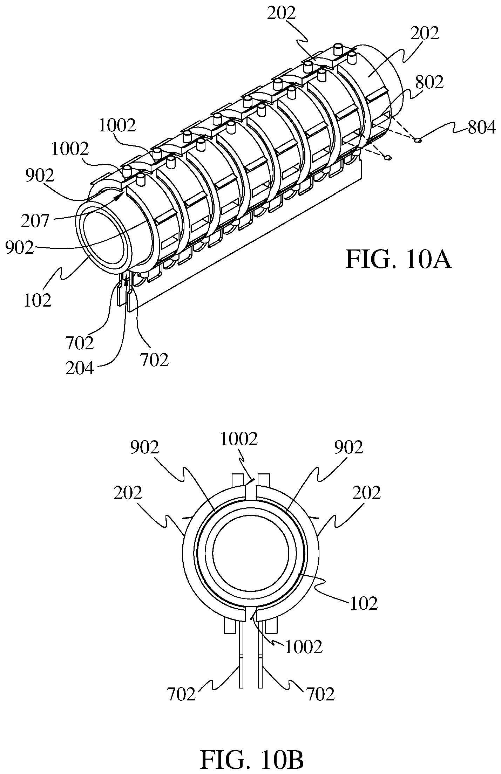

Referring to **FIG. 10A**, **10B** and **2A**, the gap **204** and **207** between the pair of modules **202** allow the air to enter and exit the gap **206.** Further, the amount and velocity of air entering and exiting the gap may **206** depend on the size of the gaps **204** and **207.** Hence, by varying the size of the gaps **204** and **207** or the extent to which the gaps **204** and **207** are exposed, the temperature of the outer shell **102** can be controlled.

The extent to which the gaps **204** and **207** are exposed can be varied by a providing a cover member **1002** at the gaps **204** and **207.** The cover member **1002** can be a hinge plate placed at the gaps **204** and **207.**

In an embodiment, by controlling the alignment of the hinged plate **1002** at the gaps **204** and **207**, the amount of air entering or exiting the space **206** through the gaps **204** or **207** can be controlled.

In an embodiment, the cover member **1002** may be located at either one of the gaps **204** and **207.**

In an embodiment, the cover members **1002** can be operated manually to adjust the extent to which the gaps **204** and **207** are exposed. Alternatively, the cover members **1002** can be operated by an automated technique, such as by using hydraulically operated telescopic rods controlled by IR temperature measurements.

### XIII. CONCLUSION

Embodiments provide a technique to control temperature in internally insulated reactors by adjusting the distance between the modules, which are designed to utilize the heat emitted from internally insulated reactors.

The processes described above is described as a sequence of steps, this was done solely for the sake of illustration. Accordingly, it is contemplated that some steps may be added, some steps may be omitted, the order of the steps may be re-arranged, or some steps may be performed simultaneously.

The example embodiments described herein may be implemented in an operating environment comprising software installed on a computer, in hardware, or in a combination of software and hardware.

Although embodiments have been described with reference to specific example embodiments, it will be evident that various modifications and changes may be made to these embodiments without departing from the subject-matter of the claims of the system and method described herein. Accordingly, the specification and drawings are to be regarded in an illustrative rather than a restrictive sense.

Many alterations and modifications of the present invention will no doubt become apparent to a person of ordinary skill in the art after having read the foregoing description. It is to be understood that the phraseology or terminology employed herein is for the purpose of description and not of limitation. It is to be understood that the description above contains many specifications, these should not be construed as limiting the scope of the invention but as merely providing illustrations of some of the personally preferred embodiments of this invention. Thus the scope of the invention should be determined by the appended claims and their legal equivalents rather than by the examples given.

## Claims

1. A system for recovering heat emitted by an internally insulated rotary kiln, the system comprising:
one or more modules, wherein the modules enclose a portion of an outer shell of the kiln, wherein each of the modules comprises: an inner shell and an outer shell defining a space within the module; an inlet configured to receive water into the module; a water distributor configured to distribute water into the module as a film configured to flow over an inner surface of the inner shell; a pressure regulating device configured to regulate pressure within the module so that the pressure within the module is ensured to be in proximity to ambient pressure; and an outlet configured to allow the exit of the water from the module.

2. The system of claim 1, further comprising a temperature regulator to measure the temperature of water exiting each module and regulate flow of water into said module through the inlet to maintain the temperature of water exiting the module.

3. The system of any one of claims 1 and 2, further comprising a pivot mechanism wherein the pivot mechanism enables the module to pivot about a pivot axis, and/or further comprising a mechanism for adjusting a distance between the kiln and the module.

4. The system of claim 3, wherein the pivot mechanism enables movement of the module towards and away from the outer shell of the kiln, wherein the pivot mechanism comprises a retractable arm configured to engage with a leg at a first position or a second position, wherein,
at the first position, extension of the retractable arm results in movement of the module towards the outer shell of the kiln, and retraction of the arm results in movement of the module away from the outer shell; and
at the second position, extension of the arm results in movement of the module away from the outer shell, and retraction of the arm results in movement of the module towards the outer shell.

5. The system of any one of claims 1 and 2, further comprising a plurality of modules or plurality of pairs of modules disposed along a longitudinal axis of the kiln.

6. The system of any one of claims 1 and 2, wherein the module or a pair of modules are disposed such that at least one gap is defined in a circumference defined by the pair of modules, or one gap is defined between the module and the outer shell of the kiln, and optionally further comprising at least one cover member configured to be operable to limit the extent of the gap exposed between the pair of modules or between the module and the outer shell of the kiln.

7. The system of any one of claims 1 and 2, wherein the module is adapted with at least one cover plate, wherein the cover plate radially extends from the module towards the outer shell of the kiln.

8. The system of any one of claims 1 and 2, wherein the module defines a window, wherein the window facilitates measurement of the temperature of the outer shell of the kiln, wherein the temperature of the outer shell of the kiln is regulated by adjusting proximity of the modules to the outer shell of the kiln.

9. The system of any one of claims 1 and 2, furthermore comprising at least one hole defined in the modules, wherein the hole is configured to allow exit of steam formed within the modules and facilitate inlet of air in case of vacuum formation within the modules.

10. The system of any one of claims 1 and 2, wherein an outer surface of the outer shell of the kiln and an outer surface of the inner shell of the module are painted with a paint with emissivity for radiation with wavelength between 1000 nanometer and 10000 nanometer.

11. The system according to claim 1 or claim 9, wherein the one or more modules enclosing the outer shell of the kiln are placed along the length of the kiln, andand wherein formation of a hotspot on the kiln is detected by characterization means of one or more characteristics of the steam exiting the pressure regulating device or at least one hole.

12. The system of claim 11, wherein the pressure releasing device is configured to allow steam to exit once the pressure within the module exceeds a predefined pressure, thereby releasing a steam plume, wherein the emergence of the steam plume is an indication of the formation of the hotspot, and/or further comprising a vacuum releasing device, wherein the vacuum releasing device is configured to receive air into the module once vacuum created in the module exceeds a predefined limit.

13. A method for recovering heat emitted by a rotary kiln, the method comprising:
enclosing at least a portion of an outer shell of the kiln with one or more modules; receiving water into the modules through an inlet;
distributing water into the module as a film configured to flow over an inner surface of an inner shell of the module and allowing the exit of heated water through an outlet; and
regulating pressure within the module so that the pressure within the module is ensured to be in proximity to ambient pressure.

14. The method of claim 13, further comprising regulating the flow of water into the modules at least based on temperature of water exiting the module,
and/or furthermore comprising controlling the distance between the modules and the outer shell to regulate the temperature of the outer shell of the kiln or the temperature of the water exiting the module,
and/or further comprising configuring a pair of cover plates with at least one of the modules, wherein the cover plates radially extend from the module towards the kiln in a space defined between the module and the kiln.

15. The method of claim 13, further comprising defining at least one circumferential gap between a pair of modules disposed in diametrically opposing sides of the kiln or between the module and the kiln,
and/or further comprising altering the extent to which the gap is exposed while the pair of modules is stationary,
and/or further comprising altering the dimension of the gap by pivoting at least one of the pair of modules towards or away from the kiln.

## Patentansprüche

1. System zur Rückführung von durch einen innenisolierten Drehofen emittierter Wärme, wobei das System Folgendes umfasst:
ein oder mehrere Module, wobei die Module einen Teil einer Außenhülle des Ofens umschließen, wobei jedes der Module Folgendes umfasst: eine Innenhülle und eine Außenhülle, die einen Raum in dem Modul definieren; einen Einlass, der konfiguriert ist, um Wasser in dem Modul aufzunehmen; einen Wasserverteiler, der konfiguriert ist, um Wasser in dem Modul als ein Film, der konfiguriert ist, um über eine Innenfläche der Innenhülle zu fließen, zu verteilen; eine
Druckregulierungsvorrichtung, die konfiguriert ist, um Druck in dem Modul zu regulieren, sodass sichergestellt wird, dass der Druck in dem Modul nahe dem Umgebungsdruck ist; und einen Auslass, der konfiguriert ist, um den Austritt des Wassers aus dem Modul zu ermöglichen.

2. System nach Anspruch 1, ferner umfassend einen Temperaturregulator zum Messen der Temperatur von Wasser, das aus jedem Modul austritt und Regulieren des Flusses von Wasser in das Modul durch den Einlass, um die Temperatur von Wasser, das aus dem Modul austritt, beizubehalten.

3. System nach einem der Ansprüche 1 und 2, ferner umfassend einen Drehmechanismus, wobei der Drehmechanismus dem Modul ermöglicht, sich um eine Drehachse zu drehen, und/oder ferner umfassend einen Mechanismus zum Anpassen eines Abstands zwischen dem Ofen und dem Modul.

4. System nach Anspruch 3, wobei der Drehmechanismus die Bewegung des Moduls in Richtung und weg von der Außenhülle des Ofens ermöglicht, wobei der Drehmechanismus einen einklappbaren Arm umfasst, der konfiguriert ist, um einen Schenkel in einer ersten Position oder einer zweiten Position in Eingriff zu nehmen, wobei
in der ersten Position das Erweitern des einklappbaren Arms zu Bewegung des Moduls in Richtung der Außenhülle des Ofens führt, und das Einziehen des Arms zu Bewegung des Moduls weg von der Außenhülle führt; und
in der zweiten Position das Erweitern des Arms zu Bewegung des Moduls weg von der Außenhülle führt und das Einziehen des Arms zu Bewegung des Moduls in Richtung der Außenhülle führt.

5. System nach einem der Ansprüche 1 und 2, ferner umfassend eine Vielzahl von Modulen oder Vielzahl von Modulpaaren, die entlang einer Längsachse des Ofens angeordnet sind.

6. System nach einem der Ansprüche 1 und 2, wobei das Modul oder ein Modulpaar derart angeordnet ist, dass mindestens ein Zwischenraum in einem durch das Modulpaar definierten Umfang definiert ist oder ein Zwischenraum zwischen dem Modul und der Außenhülle des Ofens definiert ist, und optional ferner umfassend mindestens ein Abdeckelement, das konfiguriert ist, um bedienbar zu sein, um das Ausmaß des zwischen dem Modulpaar oder zwischen dem Modul und der Außenhülle des Ofens exponierten Zwischenraums zu begrenzen.

7. System nach einem der Ansprüche 1 und 2, wobei das Modul mit mindestens einer Abdeckplatte angepasst ist, wobei sich die Abdeckplatte radial von dem Modul in Richtung der Außenhülle des Ofens erstreckt.

8. System nach einem der Ansprüche 1 und 2, wobei das Modul ein Fenster definiert, wobei das Fenster das Messen der Temperatur der Außenhülle des Ofens vereinfacht, wobei die Temperatur der Außenhülle des Ofens durch Anpassen der Nähe der Module zu der Außenhülle des Ofens reguliert wird.

9. System nach einem der Ansprüche 1 und 2, ferner umfassend mindestens ein in den Modulen definiertes Loch, wobei das Loch konfiguriert ist, um den Austritt von in den Modulen gebildetem Dampf zu ermöglichen und Eintritt von Luft im Falle von Vakuumbildung in den Modulen zu vereinfachen.

10. System nach einem der Ansprüche 1 und 2, wobei eine Außenfläche der Außenhülle des Ofens und eine Außenfläche der Innenhülle des Moduls mit einer Lackierung mit Strahlungsemissionsfähigkeit mit Wellenlänge zwischen 1000 Nanometern und 10.000 Nanometern lackiert sind.

11. System nach Anspruch 1 oder Anspruch 9, wobei das eine oder die mehreren Module, die die Außenhülle des Ofens umschließen, entlang der Länge des Ofens platziert sind, und wobei die Bildung eines Hotspots an dem Ofen durch Charakterisierungsmittel von einer oder mehreren Eigenschaften des Dampfes, der aus der Druckregulierungsvorrichtung oder mindestens einem Loch austritt, erfasst wird.

12. System nach Anspruch 11, wobei die Druckfreisetzungsvorrichtung konfiguriert ist, um Dampf zu ermöglichen, auszutreten, sobald der Druck in dem Modul einen vordefinierten Druck übersteigt, wodurch eine Dampffahne freigesetzt wird, wobei die Entstehung der Dampffahne ein Anzeichen für die Bildung des Hotspots ist, und/oder ferner umfassend eine Vakuumfreisetzungsvorrichtung, wobei die Vakuumfreisetzungsvorrichtung konfiguriert ist, um Luft in dem Modul aufzunehmen, sobald in dem Modul erzeugtes Vakuum eine vordefinierte Grenze übersteigt.

13. Verfahren zur Rückführung von durch einen Drehofen emittierter Wärme, wobei das Verfahren Folgendes umfasst:
Umschließen von mindestens einem Teil einer Außenhülle des Ofens mit einem oder mehreren Modulen; Aufnehmen von Wasser in den Modulen durch einen Einlass; Verteilen von Wasser in dem Modul als ein Film, der konfiguriert ist, um über eine Innenfläche einer Innenhülle des Moduls zu fließen und
Ermöglichen des Austritts von erwärmten Wasser durch einen Auslass; und
Regulierung von Druck in dem Modul, sodass sichergestellt wird, dass der Druck in dem Modul nahe dem Umgebungsdruck ist.

14. Verfahren nach Anspruch 13, ferner umfassend das Regulieren des Flusses von Wasser in die Module zumindest auf Grundlage von Temperatur von Wasser, das aus dem Modul austritt,
und/oder ferner umfassend das Steuern des Abstands zwischen den Modulen und der Außenhülle zum Regulieren der Temperatur der Außenhülle des Ofens oder der Temperatur des Wassers, das aus dem Modul austritt,
und/oder ferner umfassend das Konfigurieren eines Abdeckplattenpaares mit mindestens einem der Module, wobei sich die Abdeckplatten radial von dem Modul in Richtung des Ofens in einem zwischen dem Modul und dem Ofen definierten Raum erstrecken.

15. Verfahren nach Anspruch 13, ferner umfassend das Definieren von mindestens einem umlaufenden Zwischenraum zwischen einem auf diametrisch gegenüberliegenden Seiten des Ofens oder zwischen dem Modul und dem Ofen angeordneten Modulpaar,
und/oder ferner umfassend das Verändern des Ausmaßes, in dem der Zwischenraum exponiert ist, während das Modulpaar stationär ist,
und/oder ferner umfassend das Verändern der Abmessung des Zwischenraums durch Drehen von mindestens einem von dem Modulpaar in Richtung des oder weg von dem Ofen.

## Revendications

1. Système de récupération de la chaleur émise par un four rotatif isolé intérieurement, le système comprenant :
un ou plusieurs modules, dans lequel les modules enveloppent une partie d'une enveloppe extérieure du four, dans lequel chacun des modules comprend : une enveloppe intérieure et une enveloppe extérieure définissant un espace dans le module ; une entrée conçue pour recevoir de l'eau dans le module ; un distributeur d'eau conçu pour distribuer de l'eau dans le module sous la forme d'un film conçu pour s'écouler sur une surface intérieure de l'enveloppe intérieure ; un dispositif de régulation de pression conçu pour réguler la pression dans le module de sorte que la pression dans le module est assurée d'être proche de la pression ambiante ; et une sortie conçue pour permettre la sortie de l'eau du module.

2. Système selon la revendication 1, comprenant en outre un régulateur de température pour mesurer la température de l'eau sortant de chaque module et réguler l'écoulement d'eau dans ledit module à travers l'entrée pour maintenir la température de l'eau sortant du module.

3. Système selon l'une quelconque des revendications 1 et 2, comprenant en outre un mécanisme de pivot dans lequel le mécanisme de pivot permet au module de pivoter autour d'un axe de pivot, et/ou comprenant en outre un mécanisme pour ajuster une distance entre le four et le module.

4. Système selon la revendication 3, dans lequel le mécanisme de pivot permet le mouvement du module vers et à l'écart de l'enveloppe extérieure du four, dans lequel le mécanisme de pivot comprend un bras rétractable conçu pour venir en prise avec une jambe dans une première position ou une seconde position, dans lequel,
dans la première position, l'extension du bras rétractable entraîne le mouvement du module vers l'enveloppe extérieure du four, et la rétraction du bras entraîne le mouvement du module à l'écart de l'enveloppe extérieure ; et
dans la seconde position, l'extension du bras entraîne le mouvement du module à l'écart de l'enveloppe extérieure, et la rétraction du bras entraîne le mouvement du module vers l'enveloppe extérieure.

5. Système selon l'une quelconque des revendications 1 et 2, comprenant en outre une pluralité de modules ou une pluralité de paires de modules disposés le long d'un axe longitudinal du four.

6. Système selon l'une quelconque des revendications 1 et 2, dans lequel le module ou une paire de modules sont disposés de sorte qu'au moins un écart est défini dans une circonférence définie par la paire de modules, ou un écart est défini entre le module et l'enveloppe extérieure du four, et comprenant éventuellement en outre au moins un élément de couverture conçu pour être utilisable pour limiter l'étendue de l'écart exposé entre la paire de modules ou entre le module et l'enveloppe extérieure du four.

7. Système selon l'une quelconque des revendications 1 et 2, dans lequel le module est conçu avec au moins une plaque de couverture, dans lequel la plaque de couverture s'étend radialement depuis le module vers l'enveloppe extérieure du four.

8. Système selon l'une quelconque des revendications 1 et 2, dans lequel le module définit une fenêtre, dans lequel la fenêtre facilite la mesure de la température de l'enveloppe extérieure du four, dans lequel la température de l'enveloppe extérieure du four est régulée en ajustant la proximité des modules à l'enveloppe extérieure du four.

9. Système selon l'une quelconque des revendications 1 et 2, comprenant en outre au moins un trou défini dans les modules, dans lequel le trou est conçu pour permettre la sortie de vapeur formée dans les modules et faciliter l'entrée d'air en cas de formation de vide dans les modules.

10. Système selon l'une quelconque des revendications 1 et 2, dans lequel une surface extérieure de l'enveloppe extérieure du four et une surface extérieure de l'enveloppe intérieure du module sont peintes avec une peinture ayant une émissivité pour un rayonnement avec une longueur d'onde comprise entre 1 000 nanomètres et 10 000 nanomètres.

11. Système selon la revendication 1 ou la revendication 9, dans lequel les un ou plusieurs modules enveloppant l'enveloppe extérieur du four sont placés le long de la longueur du four, et dans lequel la formation d'un point chaud sur le four est détectée par un moyen de caractérisation d'une ou de plusieurs caractéristiques de la vapeur sortant du dispositif de régulation de pression ou d'au moins un trou.

12. Système selon la revendication 11, dans lequel le dispositif de libération de pression est conçu pour permettre à la vapeur de sortir une fois que la pression dans le module dépasse une pression prédéfinie, libérant ainsi un panache de vapeur, dans lequel l'émergence du panache de vapeur est une indication de la formation du point chaud, et/ou comprenant en outre un dispositif de libération de vide, dans lequel le dispositif de libération de vide est conçu pour recevoir de l'air dans le module une fois que le vide créé dans le module dépasse une limite prédéfinie.

13. Procédé de récupération de la chaleur émise par un four rotatif, le procédé comprenant :
l'enveloppement d'au moins une partie d'une enveloppe extérieure du four avec un ou plusieurs modules ;
la réception d'eau dans les modules à travers une entrée ;
la distribution d'eau dans le module sous la forme d'un film conçu pour s'écouler sur une surface intérieure d'une enveloppe intérieure du module et la permission de la sortie d'eau chauffée à travers une sortie ; et
la régulation de la pression dans le module de sorte que la pression dans le module est assurée d'être proche de la pression ambiante.

14. Procédé selon la revendication 13, comprenant en outre la régulation de l'écoulement d'eau dans les modules au moins sur la base de la température de l'eau sortant du module,
et/ou comprenant en outre la commande de la distance entre les modules et l'enveloppe extérieure pour réguler la température de l'enveloppe extérieure du four ou la température de l'eau sortant du module,
et/ou comprenant en outre la configuration d'une paire de plaques de couverture avec au moins l'un des modules, dans lequel les plaques de couverture s'étendent radialement depuis le module vers le four dans un espace défini entre le module et le four.

15. Procédé selon la revendication 13, comprenant en outre la définition d'au moins un écart circonférentiel entre une paire de modules disposés dans des côtés diamétralement opposés du four ou entre le module et le four,
et/ou comprenant en outre la modification de l'étendue à laquelle l'écart est exposé pendant que la paire de modules est fixe,
et/ou comprenant en outre la modification de la dimension de l'écart en faisant pivoter au moins l'un de la paire de modules vers ou à l'écart du four.
